# EUROPÄISCHE PATENTSCHRIFT

(11) **EP 0 462 440 B1**
(45) Veröffentlichungstag und Bekanntmachung des Hinweises auf die Patenterteilung: **06.09.1995**
(21) Anmeldenummer: 91109042.1
(22) Anmeldetag: 03.06.1991
(51) Int. Cl.: C12C 13/02

(54) **Würzekochvorrichtung mit Aussenkocher**
Device with external boiler for boiling wort
Appareil à calandre extérieure pour l'ébullition du moût

(30) Priorität: 19.06.1990 DE 4019526
(43) Veröffentlichungstag der Anmeldung: 27.12.1991
(73) Patentinhaber: ANTON STEINECKER ENTWICKLUNGS GmbH & Co., D-85318 Freising (DE)
(72) Erfinder: Brauer, Heinz, W-8050 Freising (DE); Widhopf, Martin, W-8051 Pulling (DE)
(74) Vertreter: Grünecker, Kinkeldey, Stockmair & Schwanhäusser Anwaltssozietät

(56) Entgegenhaltungen:
- EP-A- 265 908
- DE-A- 3 106 875

## Beschreibung

Die Erfindung betrifft eine Würzekochvorrichtung, mit einer Würzepfanne und wenigstens einem getrennten, außerhalb der Würzepfanne gelegenen, einen Wärmetauscher zum Aufheizen oder/und Kochen der Würze aufweisenden Heizungskreislauf, wobei der Wärmetauscher eine Anordnung von Wärmetauscherröhren für die Durchleitung der Würze durch den Wärmetauscher enthält.

Das Kochen der Würze bei der Bierherstellung dient unter anderem dazu, überschüssiges Wasser zu verdampfen, um eine gewünschte Würzekonzentration zu erzielen. Darüber hinaus dient das Kochen der Würze im wesentlichen zur Zerstörung der Enzyme und zur Sterilisation der Würze, sowie dazu, eine möglichst vollkommene Ausscheidung der gerinnbaren Proteine und eine Lösung der Hopfenwertbestandteile in der Würze, vor allem der Hopfenbitterstoffe, zu erzielen.

Zum Kochen der Würze werden sowohl Innen- als auch Außenkocher verwendet. Innenkocher sind direkt innerhalb der Würzepfanne angeordnet, während durch Wärmetauscher gebildete Außenkocher in einem außerhalb der Würzepfanne gelegenen Heizungskreislauf vorgesehen sind. Eine Würzekochvorrichtung mit Außenkocher, wie anfangs beschrieben, ist aus der DE 34 30 798 A1 bekannt.

Beim Würzekochen sind je nach Biertyp unterschiedliche Ausschlagmengen, d.h. unterschiedliche Verdampfungsziffern, erforderlich. Nach dem Stand der Technik bestehen bei der Verwendung von Außenkochern nur wenig Möglichkeiten, unterschiedliche Verdampfungsziffern zu erzielen. Da eine konstante Strömungsgeschwindigkeit der Würze innerhalb des Wärmetauschers im Bereich von 2 bis 2,5 m/sek eingehalten werden muß, kann der Verdampfungsgrad durch Änderung der Umwälzleistung nur wenig variiert werden. Der Variation der Verdampfungsziffern durch Änderung der Temperatur im Wärmetauscher sind ebenfalls Grenzen gesetzt, weil sich die Temperatur der Würze aus technologischen Gründen nur in einem engen Bereich ändern darf.

Aus der DE-GM 19 68 118 ist eine Vorrichtung zum Herstellen von Bier bekannt, in welcher an einen Würze enthaltenden Behälter zwei in Reihe geschaltete Wärmetauscher angeschlossen sind, und durch ein Ventil und eine Verbindungsleitung derart verbindbar sind, daß nur einer der beiden Wäremtauscher benutzt wird oder beide Wärmetauscher in Reihenschaltung benutzt werden. In diesem aus der genannten Druckschrift bekannten besonderen Verfahren zur Bierherstellung, bei dem in dem Würzebehälter, an den die Wärmetauscher angeschlossen sind, durch eine Öffnung Hopfen einfüllbar ist, sollen die Wärmetauscher die Braupfanne ersetzen.

Es ist die Aufgabe der Erfindung, eine Würzekochvorrichtung der eingangs erwähnten Art zu schaffen, die sich zum Kochen der Würze für verschiedene Biertypen verwenden läßt, und insbesondere die Möglichkeit zum Würzekochen mit unterschiedlichen Verdampfungsziffern bietet.

Erfindungsgemäß wird diese Aufgabe dadurch gelöst, daß der Wärmetauscher eine eine Anzahl von Wärmetauscherröhren aufweisende Wärmetauschersektionen mit jeweils einem Einlaß und einem Auslaß für die Würze umfaßt, und daß die Wärmetauschersektion Rohrverbindungen und Ventile derart aufweist, daß die Würze unter Einbeziehung aller Wärmeaustauscherröhren der jeweiligen Wärmetauschersektion auf unterschiedlich langen Durchgangswegen durch die Wärmeaustauschersektion hindurchleitbar ist.

Durch diese erfindungsgemäße Lösung wird erreicht, daß die Würze bei annähernd konstanter Strömungsgeschwindigkeit durch den Wärmetauscher und annähernd konstanter Heiztemperatur unterschiedlich lange der Beheizung ausgesetzt ist, und dadurch unterschiedliche Materialmengen verdampft werden. Indem Durchgangswege unterschiedlicher Länge für die Würze vorgesehen werden können, kann die Vorrichtung zum Kochen der Würze für unterschiedliche Biertypen verwendet werden.

In einer bevorzugten Ausführungsform der Erfindung können Wärmetauscherröhren zur Bildung unterschiedlich langer Durchgangswege zueinander zu Reihen- oder/und Parallelschaltungen verbunden werden.

In einer bevorzugten Ausführungsform der Erfindung sind je Sektion neun Wärmetauscherröhren vorgesehen, wobei an den Enden der Wärmetauscherröhren Rohrverbindungen und Ventile derart angeordnet sind, daß die neun Wärmetauscherröhren zur Einstellung einer ersten Durchgangsweglänge in Reihe schaltbar und zur Einstellung einer zweiten Durchgangsweglänge eine Reihenschaltung aus jeweils drei parallel geschalteten Wärmetauscherröhren herstellbar ist. Damit beträgt die zweite Durchgangslänge nur etwa ein Drittel der ersten Durchgangslänge.

Weitere vorteilhafte Ausgestaltungmöglichkeiten der Erfindung gehen aus den Unteransprüchen hervor.

Die Erfindung soll nun anhand von Ausführungsbeispielen und der sich auf diese Ausführungsbeispiele beziehenden beiliegenden Zeichnungen weiter erläutert und beschrieben werden. Es zeigen:
- Fig.1: eine Würzekochvorrichtung mit einem äußeren Wärmetauscher in einer Seitenansicht,
- Fig.2: einen erfindungsgemäßen Wärmetauscher in einer Seitenansicht,
- Fig. 3: den erfindungsgemäßen Wärmetauscher gemäß der Fig. 2 in einer Draufsicht gemäß der Schnittlinie A-A von Fig. 2,
- Fig. 4: eine erfindungsgemäße Wärmetauschersektion in einer Abwicklung, wobei eine erste Durchgangslänge für die Würze eingestellt ist,
- Fig. 5: die Wärmetauschersektion gemäß der Fig. 4, wobei eine zweite Durchgangslänge für die Würze eingestellt ist, und
- Fig. 6: ein zweites Ausführungsbeispiel für einen erfindungsgemäßen Wärmetauscher in einer Draufsicht.

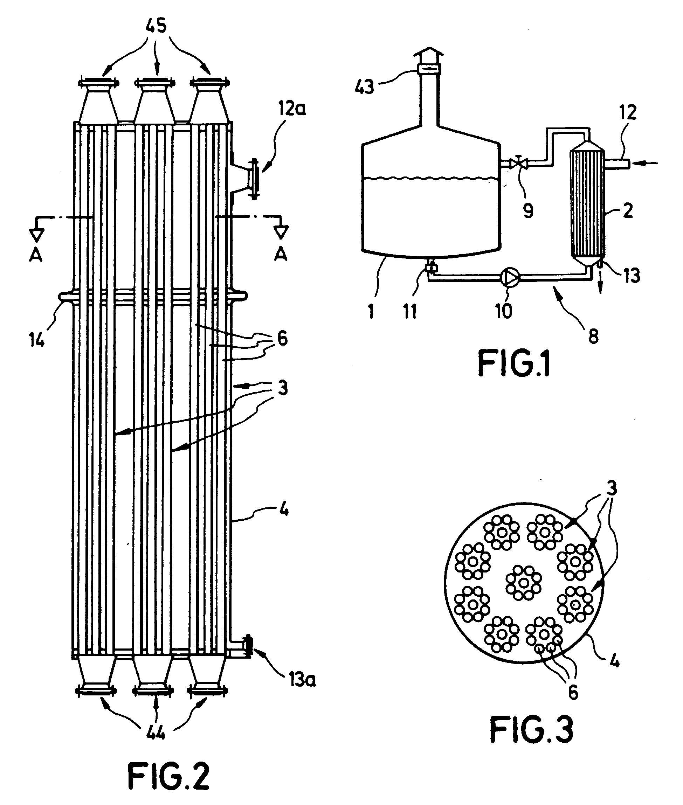

In der Fig. 1 ist mit dem Bezugszeichen 1 eine Würzepfanne bezeichnet, die mit einem äußeren Heizungskreislauf 8 versehen ist. In dem äußeren Heizungskreislauf 8 sind ein Wärmetauscher 2, eine Pumpe 10 sowie Ventile 9 und 11 vorgesehen. Der Wärmetauscher 8 weist einen Einlaß 12 für in den Wärmetauscher einströmenden Heizdampf oder für Heißwasser und einen Auslaß 13 für den Heizdampf bzw. das Heizdampfkondensat oder das Heißwasser auf. Mit 43 ist ein Ventil bezeichnet, durch das die Würzepfanne geöffnet werden kann, um den beim Würzekochen entstehenden Dampf aus der Würzepfanne zu entlassen.

Zum Kochen wird die Würze aus der Würzepfanne 1 nach Öffnen des Ventils 11 mit Hilfe der Pumpe 10 in den Wärmetauscher 2 gepumpt, wobei während einer Aufheizphase das Ventil 9 noch geschlossen bleibt. Nach einer Aufheizphase wird das Ventil 9 geöffnet und die im Wärmetauscher 2 erhitzte Würze strömt kontinuierlich in die Würzepfanne 1 zurück, wo eine Nachverdampfung erfolgt, und der Dampf, der sogenannte Brüden, durch das geöffnete Ventil 43 aus der Würzepfanne 1 austreten kann.

Der in der Fig. 1 nur schematisch dargestellte Wärmetauscher ist in den Fig. 2 und 3 detaillierter dargestellt. Mit dem Bezugszeichen 3 sind Wärmetauschersektionen bezeichnet, die jeweils Bündel von neun zueinander parallelen, innerhalb eines kreisförmigen Querschnitts symmetrisch angeordneten Wärmetauscherröhren 6 enthalten. Die Wärmetauschersektionen weisen jeweils einen Einlaß 44 und einen Auslaß 45 für die durch den Wärmetauscher strömende Würze auf. An den Enden der Wärmetauschersektionen 3 sind jeweils Rohrverbindungen mit darin enthaltenen Ventilen (in den Fig. 2 und 3 nicht gezeigt) vorgesehen, durch die in jeder Sektion Durchgangswege für die Würze unter Einbeziehung sämtlicher in der Sektion enthaltenen Wärmetauscherröhren gebildet sind. Sämtliche Wärmetauschersektionen 3 sind gemeinsam von einer Außenummantelung 4, durch die eine Außenwand des Wärmetauschers gebildet ist, umgeben. Die Ummantelung 4 weist als Dehnungskompensator zum Ausgleich von Wärmeausdehnungen eine umlaufende Sicke 14 auf. Weiterhin weist die Ummantelung 4 einen Rohransatz 12a zum Eintritt von Heizdampf und einen Rohransatz 13a für den Austritt des Heizdampfs bwz. den Austritt von Heizdampfkondensat auf.

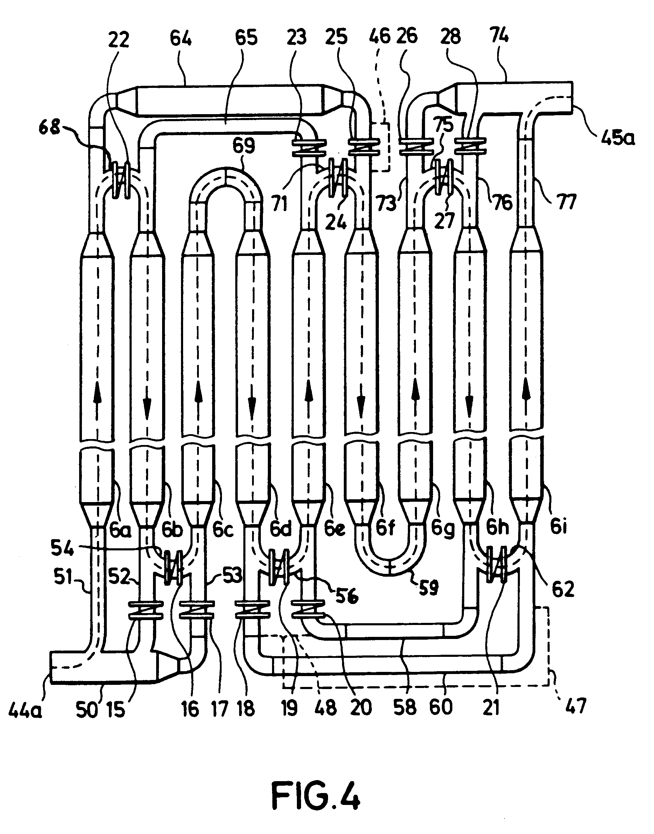

Wie die einzelnen Wärmetauscherröhren einer Wärmetauschersektion an ihren Enden miteinander verbunden sind, geht aus der Fig. 4 hervor, in der eine Wärmetauschersektion in einer Abwicklung, wobei die einzelnen Wärmetauscherröhren 6a - 6i der Wärmetauschersektion in einer Reihe angeordnet sind, dargestellt ist. Ein Verbindungsrohr 50 weist einen Einlaß 44a für die Würze auf und ist über davon abzweigende Verbindungsrohre 51 - 53 mit jeweils einem Ende der Wärmetauscherröhren 6a - 6c verbunden. In den Verbindungsrohren 52 und 53 ist jeweils ein Ventil 15 bzw. 17 vorgesehen. Zwischen den Verbindungsrohren 52 und 53 ist ein weiteres Verbindungsrohr 54, in dem ein Ventil 16 vorgesehen ist, angeordnet. Die jeweils anderen Enden der Wärmetauscherröhren 6a - 6c sind über Verbindungsrohre 64, 65 und 69 mit Wärmetauscherröhren 6f, 6e, bzw. 6d verbunden. Zwischen den Verbindungsrohren 64 und 65 sind Querverbindungsrohre 68 und 71 vorgesehen, in denen Ventile 22 bzw. 24 angeordnet sind. Im Bereich zwischen den beiden Querverbindungsrohren 68 und 71 ist jeweils in den Verbindungsrohren 64 und 65 ein Ventil 25 bzw. 23 vorgesehen. An den den Verbindungsrohren 64, 65 und 69 gegenüberliegenden Enden der Wärmetauscherröhren 6d - 6f sind die Wärmetauscherröhren 6d - 6f über Verbindungsrohre 60, 58 und 59 mit Wärmetauscherröhren 6i, 6h bzw. 6g verbunden. Zwischen den Verbindungsrohren 58 und 60 sind zwei Verbindungsrohre 56 und 62 vorgesehen, in denen jeweils ein Ventil 19 bzw. 21 angeordnet ist. Im Bereich zwischen den beiden Querverbindungsrohren 56 und 62 weisen die Rohre 58 und 60 jeweils ein Ventil 20 bzw. 18 auf. An den den Verbindungsrohren 58, 59 und 60 gegenüberliegenden Enden der Wärmetauscherröhren 6g - 6i schließen sich Verbindungsrohre 73, 76 und 77 an, die in einem gemeinsamen Verbindungsrohr 74 mit einem Austritt 45a für die Würze enden. In den Rohren 73 und 76 ist jeweils ein Ventil 26 bzw. 28 vorgesehen und in Richtung auf das Rohr 74 vor den Ventilen 26 und 28 ist zwischen den Rohren 73 und 76 ein Querverbindungsrohr 75 mit einem Ventil 27 angeordnet. Mit 46 ist eine Beipaßleitung bezeichnet, die das Ventil 25 überbrückt. Weiterhin ist an dem Verbindungsrohr 60 eine Beipaßleitung 47 vorgesehen, die ihrerseits über eine Verbindungsleitung 48 mit der Rohrverbindung 58 verbunden ist.

In der Fig. 4 ist ein Zustand dargestellt, in dem die Ventile 16, 19, 21, 22, 24, 27 geöffnet, und die Ventile 15, 17, 18, 20, 23, 25, 26 und 28 geschlossen sind. Damit sind die einzelnen Wärmetauscherröhren 6a - 6i in Reihe geschaltet und es ist eine erste Durchgangsweglänge für die Würze gebildet, die ungefähr dem 9-fachen der Länge einer Wärmeaustauscherröhre entspricht (die Länge der Verbindungsrohre ist gegenüber der Lange der Wärmetauscherröhren weitgehend vernachlässigbar). Um zu verhindern, daß sich bin den bei geschlossenen Ventilen 18, 20 und 25 blind endenden Rohrverbindungen 60, 58 und 64 Würze anstaut und stehen bleibt, sind die Beipaßleitungen 47, 48 bzw. 46 vorgesehen, die einen geringen Leitungsquerschnitt aufweisen und für einen Abfluß der Würze aus den blind endenden Rohrverbindungen sorgen.

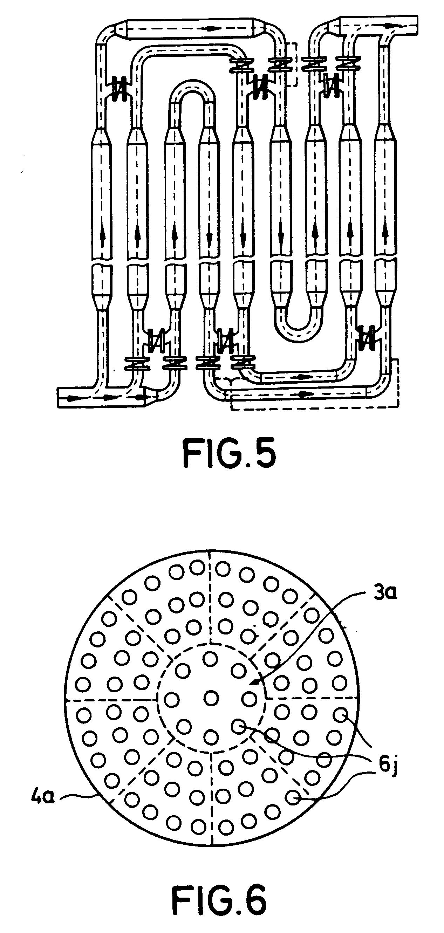

In der Fig. 5, in der wegen der Übereinstimmung mit der Fig. 4 auf die Einführung von Bezugszeichen verzichtet werden konnte, ist ein Zustand dargestellt, in dem die Ventile 16, 19, 21, 22, 24 und 27 geschlossen und die übrigen Ventile geöffnet sind. Damit sind die Wärmetauscherröhren 6a - 6c, 6d - 6f und 6g -6i jeweils parallel geschaltet und zwischen den drei Parallelschaltungen ist eine Reihenschaltung gebildet. Die Durchgangsweglänge für die Würze beläuft sich in diesem Fall etwa nur auf das 3-fache der Länge einer Wärmetauscherröhre.

Bei konstanter Durchlaufgeschwindigkeit ist im Einstellzustand gemäß der Fig. 4 die Würze etwa dreimal solange der Beheizung ausgesetzt wie bei dem Einstellzustand gemäß der Fig. 5. Entsprechend wird in diesem Einstellzustand eine größere Materialmenge als im Einstellzustand gemäß der Fig. 5 verdampft. Damit ist die Vorrichtung für unterschiedliche Biertypen, die unterschiedliche Verdampfungsziffern erfordern, verwendbar.

Bei dem in der Fig. 6 gezeigten Ausführungsbeispiel für einen Wärmetauscher ist nur in der Mitte des Wärmetauschers mit der Außenwand 4a eine Wärmetauschersektion 3a, die in der Anordnung der Wärmetauscherröhren 6i den Wärmetauschersektionen des vorangehenden Ausführungsbeispieles entspricht, vorgesehen. In weiteren acht Wärmetauschersektionen sind jeweils neun Wärmetauscherröhren 6i innerhalb eines Kreisringsektors verteilt angeordnet.

Die Zahl der Wärmetauschersektionen und die Zahl der Wärmetauscherröhren je Sektion muß nicht, wie bei den gezeigten Ausführungsbeispielen, gleich neun sein, und die beiden Zahlen brauchen auch nicht übereinzustimmen.

## Patentansprüche

1. Würzekochvorrichtung, mit einer Würzepfanne (1) und wenigstens einem getrennten, außerhalb der Würzepfanne gelegenen, einen Wärmetauscher (2) zum Aufheizen oder/und Kochen der Würze aufweisenden Heizungskreislauf, wobei der Wärmetauscher (2) eine Anordnung von Wärmetauscherröhren für die Durchleitung der Würze durch den Wärmetauscher enthält, **dadurch gekennzeichnet,** daß der Wärmetauscher wenigstens eine eine Anzähl von Wärmetauscherröhren aufweisende Wärmetauschersektion (3) mit einem Einlaß und einem Auslaß für die Würze umfaßt, und daß die Wärmetauschersektion (3) Rohrverbindungen und Ventile derart aufweist, daß die Würze unter Einbeziehung aller Wärmetauscherröhren der jeweiligen Wärmetauschersektion auf unterschiedlich langen Durchgangswegen durch die Wärmetauschersektion hindurchleitbar ist.

2. Vorrichtung nach Anspruch 1, **dadurch gekennzeichnet,** daß Wärmetauscherröhren zur Bildung unterschiedlich langer Durchgangswege zueinander zu Reihen- oder/und Parallelschaltungen verbindbar sind.

3. Vorrichtung nach einem der Ansprüche 1 oder 2, **dadurch gekennzeichnet,** daß die Wärmetauschersektion neun Wärmetauscherröhren enthält.

4. Vorrichtung nach Anspruch 3, **dadurch gekennzeichnet,** daß die Wärmetauscherröhren der Sektion zur Bildung einer ersten Durchgangslänge für die Würze zu einer Reihenschaltung und zur Bildung einer zweiten Durchgangslänge für die Würze zu einer Reihenschaltung aus jeweils drei parallel geschalteten Röhren verbindbar sind.

5. Vorrichtung nach einem der Ansprüche 1 bis 4, **dadurch gekennzeichnet,** daß die Wärmetauschersektionen (3) gemeinsam von einer eine Außenwand des Wärmetauschers bildenden Außenummantelung für die Führung von Heizdampf umgeben sind.

6. Vorrichtung nach einem der Ansprüche 1 bis 5, **dadurch gekennzeichnet,** daß Beipaßleitungen mit geringem Querschnitt zur Entleerung von durch Ventilverschluß blind endenden Röhrenarmen vorgesehen sind.

## Claims

1. Wort boiling device, having a wort copper (1) and at least one separate heating circuit situated outside the wort copper and having a heat exchanger (2) for heating up or/and boiling the wort, the heat exchanger (2) containing an arrangement of heat exchanger pipes for conducting the wort through the heat exchanger, characterized in that the heat exchanger contains at least one heat exchanger section (3) which has a number of heat exchanger pipes and has an inlet and an outlet for the wort, and in that the heat exchanger section (3) has pipe connections and valves in such a manner that the wort can be conducted through the heat exchanger section on through-paths of different length using all of the heat exchanger pipes of the particular heat exchanger section.

2. Device according to Claim 1, characterized in that, for forming through-paths of different length, heat exchanger pipes can be connected to one another to give series or/and parallel connections.

3. Device according to one of Claims 1 or 2, characterized in that the heat exchanger section contains nine heat exchanger pipes.

4. Device according to Claim 3, characterized in that, for forming a first through-length for the wort, the heat exchanger pipes of the section can be connected to give a series connection and, for forming a second through-length for the wort, can be connected to give a series connection comprising three respective pipes connected in parallel.

5. Device according to one of Claims 1 to 4, characterized in that the heat exchanger sections (3) are jointly surrounded, for the guidance of heating steam, by an outer casing, which forms an outer wall of the heat exchanger.

6. Device according to one of Claims 1 to 5, characterized in that by-pass conduits having a small cross-section are provided for emptying pipe arms which end blind due to valve closure.

## Revendications

1. Appareil pour l'ébullition du moût, avec une chaudière à moût (1) et un circuit de chauffage, au moins, séparé, monté à l'extérieur de la chaudière et présentant un échangeur (2) pour le chauffage et/ou l'ébullition du moût, l'échangeur (2) comportant un agencement de tubes pour le passage du moût au travers de l'échangeur, caractérisé en ce que l'échangeur comporte une section d'échange (3), au moins, munie d'un certain nombre de tubes, avec une admission et une décharge pour le moût, et en ce que la section d'échange (3) présente des raccords de tube et des soupapes, de sorte que le moût peut passer au travers de la section d'échange sur des parcours de différente longueur, à l'inclusion de tous les tubes d'échangeur de la section respective.

2. Appareil suivant la revendication 1, caractérisé en ce que les tubes d'échangeur peuvent être mutuellement couplés en série et/ou en parallèle, pour former des parcours de différente longueur.

3. Appareil suivant l'une quelconque des revendications 1 ou 2, caractérisé en ce que la section d'échange comporte neuf tubes d'échangeur.

4. Appareil suivant la revendication 3, caractérisé en ce que les tubes d'échangeur de la section peuvent être reliés en un montage en série, pour former une première longueur de passage pour le moût, et en un montage en série, respectivement composé de trois tubes couplés en parallèle, pour former une seconde longueur de passage pour le moût.

5. Appareil suivant l'une quelconque des revendications 1 à 4, caractérisé en ce que les sections d'échange (3) sont enveloppées conjointement par une gaine externe, formant une paroi externe de l'échangeur, pour le passage de la vapeur surchauffée.

6. Appareil suivant l'une quelconque des revendications 1 à 5, caractérisé en ce que des bipasses de faible section transversale sont prévus pour la vidange des bras de tubes, aux extrémités aveugles par la fermeture des soupapes.
